Europäisches Patentamt

European Patent Office

Office européen des brevets

(19)

(11) **EP 1 241 201 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(51) Int Cl.$^7$: **C08G 18/66**, C08G 18/73

(21) Anmeldenummer: **02004368.3**

(22) Anmeldetag: **05.03.2002**

(54) **Aliphatische thermoplastische Polyurethane und ihre Verwendung**

Aliphatic thermoplastic polyurethane and its use

Polyuréthane aliphatique thermoplastique et son utilisation

(84) Benannte Vertragsstaaten:
**AT BE CH CY DE DK ES FI FR GB GR IE IT LI LU MC NL PT SE TR**

(30) Priorität: **15.03.2001 DE 1012366**

(43) Veröffentlichungstag der Anmeldung:
**18.09.2002 Patentblatt 2002/38**

(73) Patentinhaber: **Bayer MaterialScience AG 51368 Leverkusen (DE)**

(72) Erfinder:
- **Kaufhold, Wolfgang, Dr.**
  **51061 Köln (DE)**
- **Dr. Peerlings, Henricus**
  **42699 Solingen (DE)**
- **Hoppe, Hans-Georg**
  **42799 Leichlingen (DE)**
- **Röhrig, Wolfgang**
  **51467 Bergisch Gladbach (DE)**

(56) Entgegenhaltungen:
**EP-A- 0 320 946        EP-A- 1 028 132**

**Beschreibung**

Die Erfindung betrifft weiche (70 bis 90 Shore A-Härte) aliphatische thermoplastische Polyurethane (TPU) mit reduzierter mechanischer Festigkeit und gleichzeitig hoher Wärmestandfestigkeit und hohem Schmelzpunkt.

Aromatische thermoplastische Polyurethane (aromatische TPU) sind aufgrund ihres Aufbaus aus aromatischen Diisocyanaten nicht lichtstabil. Bei Farbeinstellungen von Formkörpern entsteht durch Lichteinwirkung eine starke Vergilbung, und selbst bei schwarzen Formkörpern kommt es zu einer Farb- und Glanzgradveränderung.

Aliphatische thermoplastische Polyurethane (TPU) sind für den Einsatz in der Innenausstattung von Kraftfahrzeugen, z.B. in Oberflächenverkleidungen von Instrumententafeln, bereits bekannt (z.B. aus DE-C 42 03 307). Naturgemäß besteht hierbei der Wunsch, ein einheitliches Aussehen der gesamten Oberflächenverkleidung zu erreichen und diese daher aus einem einzigen Material zu fertigen. Es tritt hierbei jedoch das Problem auf, dass sich die gängigen aliphatischen thermoplastischen Polyurethane mit hoher Lichtechtheit und Temperaturstabilität aufgrund ihrer hervorragenden mechanischen Eigenschaften, insbesondere der hohen Reißfestigkeit, nicht als Abdeckung für Airbags eignen, insbesondere dann nicht, wenn der Beifahrer-Airbag als unsichtbarer, integraler Bestandteil der Instrumententafel konzipiert ist.

In DE-C 42 03 307 ist eine thermoplastisch in Form von Sinterpulver verarbeitbare Polyurethanformmasse zur Herstellung genarbter Sinterfolien beschrieben, wobei die Formmasse ausschließlich aus linearen, aliphatischen Komponenten besteht. Die Polyolkomponente setzt sich aus 60 bis 80 Gewichtsteilen eines aliphatischen Polycarbonatdiols mit einem Molekulargewicht $\overline{M}_n$ von 2000 und 40 bis 20 Gewichtsteilen eines Polydiols auf Basis Adipinsäure, Hexandiol und Neopentylglykol mit einem Molekulargewicht $\overline{M}_n$ von 2000 zusammen. Ferner werden 1,6-Hexamethylendiisocyanat in einem Äquivalenzverhältnis von 2,8:1,0 bis 4,2:1,0, bezogen auf das Polyolgemisch, und 1,4-Butandiol als Kettenverlängerungsmittel eingesetzt, wobei das Äquivalenzverhältnis des 1,4-Butandiols, bezogen auf das Polygemisch, 1,3:1,0 bis 3,3:1,0 beträgt. Die aus diesen Formmassen hergestellten Folien zeichnen sich unter anderem durch eine hohe Zug-, Einreiß- und Weiterreißfestigkeit aus. Auch in EP-A 399 272 werden Polyurethanfolien mit guten mechanischen Eigenschaften, insbesondere hoher Reißfestigkeit beschrieben.

Aus EP-A 555 393 sind weiche, aliphatische TPU auf Basis aliphatischer Diisocyanate (HDI, H12-MDI u.a.) und Polyoxyalkylenglykolen mit sehr guten mechanischen Eigenschaften bekannt.

In EP-A 712 887 werden allgemein TPU auf Basis aliphatischer Diisocyanate (HDI, H12-MDI u.a.) und diversen Polyetherglykolen mit guter Lichtstabilität beschrieben.

Es bestand daher die Aufgabe, weiche (70-90 Shore A-Härte) TPU mit hoher Lichtechtheit und Wärmeformbeständigkeit zur Verfügung zu stellen, die jedoch eine geringere mechanische Festigkeit aufweisen als die bisher bekannten thermoplastischen Polyurethane.

Diese Aufgabe konnte überraschend mit den erfindungsgemäßen thermoplastischen Polyurethanen gelöst werden.

Gegenstand der vorliegenden Erfindung sind weiche, aliphatische, thermoplastische Polyurethane mit einer Shore A Härte von 70 bis 90 erhältlich, gegebenenfalls unter Verwendung von Katalysatoren (D), aus

   A) einem Gemisch aus

      A1) 100 bis 70 mol-% Hexamethylendiisocyanat (HDI) und

      A2) 0 bis 30 mol-% andere von HDI verschiedene, aliphatische Diisocyanate, wie beispielsweise Dicyclohexylmethandiisocyanat (hydriertes MDI) oder Isophorondiisocyanat (IPDI) oder Gemische derselben,

   B) einem Gemisch aus

      B1) 100-70 Gew.-%, bevorzugt 100-80 Gew.-%, eines Polyoxypropylenglykols, eines Polyoxyethylenglykols oder Copolyoxyalkylendiolen auf Basis Propylenoxid und Ethylenoxid oder Gemische davon mit einem zahlenmittleren Molekulargewicht von 2 500 bis 10 000 g/mol und

      B2) 0-30 Gew.-%, bevorzugt 0-20 Gew.-%, eines von B1) verschiedenen Polyols mit einem zahlenmittleren Molekulargewicht zwischen 600 und 10000 g/mol und

   C) Kettenverlängerer mit einem zahlenmittleren Molekulargewicht von 60 bis 500 g/mol, gegebenenfalls unter Zusatz von

   E) üblichen Hilfsmitteln und Zusatzstoffen,

2

wobei das Äquivalenzverhältnis von Diisocyanat A) zu der Summe der Polyole B1) und B2) zwischen 1,5:1,0 und 30,0: 1,0 liegt und wobei die NCO-Kennzahl (gebildet aus dem mit 100 multiplizierten Quotienten der Äquivalenzverhältnisse von Isocyanatgruppen aus A) und der Summe der Hydroxylgruppen aus B) und C)) 95 bis 105 beträgt.

Besonders bevorzugt sind aliphatische thermoplastische Polyurethane, bei denen das Gemisch B) aus 100 Gew.-% B1) besteht und der Kettenverlängerer C) aus 80 bis 100 Gew.-% 1,6-Hexandiol (C1) und 0 bis 20 Gew.-% eines von (C1) verschiedenen Kettenverlängerers (C2) mit einem zahlenmittleren Molekulargewicht von 60 bis 500 g/mol besteht.

Die Komponente B1) weist besonders bevorzugt ein zahlenmittleres Molekulargewicht von 3500 bis 6000 g/mol auf.

Die obige Reihenfolge der Komponenten A bis E sagt nichts über die Herstellungsweise der erfindungsgemäßen TPU aus. Die erfindungsgemäßen TPU können in verschiedenen Verfahrensvarianten hergestellt werden, wobei diese Varianten untereinander gleichwertig sind.

Die erfindungsgemäßen TPU auf Basis zweier unterschiedlicher aliphatischer Diisocyanate "A1" (HDI) und "A2" (aliphatisches, von HDI verschiedenes Diisocyanat) können beispielsweise in einem Reaktionsprozess zum TPU "A1-2" hergestellt werden. Man kann jedoch auch in bekannter Weise zunächst das TPU "A1" auf Basis des aliphatischen Diisocyanates "A1" und getrennt davon das TPU "A2" auf Basis des aliphatischen Diisocyanates "A2" herstellen, wobei die übrigen Komponenten B bis E identisch sind. Danach werden dann TPU "A1" und TPU "A2" in bekannter Weise im gewünschten Verhältnis zum TPU "A1-2" gemischt (z.B. mit Extrudern oder Knetern).

Die erfindungsgemäßen TPU auf Basis von Polyolgemischen können ebenfalls durch Einsatz von Polyolgemischen (Polyol B1 und Polyol B2) (z.B. in Mischaggregaten) in einem Reaktionsprozess zum TPU "B1-2" hergestellt werden. Zum anderen kann in bekannter Weise zunächst das TPU "B1" auf Basis von Polyol "B1" und getrennt davon das TPU "B2" auf Basis von Polyol "B2" hergestellt werden, wobei die restlichen Komponenten A und C bis E identisch sind. Danach werden dann TPU "B1" und "B2" in bekannter Weise im gewünschten Verhältnis zum TPU "B1-2" gemischt (z.B. mit Extrudern oder Knetern).

Je nach Anforderung an das Formteil, welches aus dem erfindungsgemäßen TPU hergestellt wird, kann das Hexamethylendiisocyanat (HDI) partiell gegen ein oder mehrere andere aliphatische Diisocyanate, insbesondere Isophorondiisocyanat (IPDI), 1,4-Cyclohexandiisocyanat, 1-Methyl-2,4-cyclohexandiisocyanat, 1-Methyl-2,6-cyclohexandiisocyanat und Isomerengemische davon, 4,4'-, 2,4'- und 2,2'-Dicyclohexylmethandiisocyanat und Isomerengemische davon ersetzt werden.

Bei Anwendungen mit geringeren Anforderungen an die Lichtstabilität, z.B. dunkel eingefärbten Formmassen können Teile (0 bis 20 Gew.-%) des aliphatischen Diisocyanats sogar durch aromatische Diisocyanate ersetzt werden. Diese sind in Justus Liebigs Annalen der Chemie 562, S.75-136 beschrieben. Beispiele sind 2,4 Toluylendiisocyanat, Gemische aus 2,4- und 2,6 Toluylendiisocyanat, 4,4'-, 2,2'- und 2,4'-Diphenylmethandiisocyanat, Gemische aus 2,4- und 4,4'-Diphenylmethandiisocyanat, urethanmodifizierte, flüssige 2,4- und/oder 4,4'-Diphenylmethandiisocyanate, 4,4'-Diisocyanatodiphenylethan(1,2) und 1,5- Naphthylendiisocyanat.

Als Komponente B2) werden lineare hydroxylterminierte Polyole mit einem mittleren Molekulargewicht von 600 bis 10000 mol, bevorzugt von 700 bis 4 200 g/mol eingesetzt. Produktionsbedingt enthalten diese oft kleine Mengen an nichtlinearen Verbindungen. Häufig spricht man daher auch von "im wesentlichen linearen Polyolen".

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyesterdiole besitzen mittlere Molekulargewichte von 600 bis 10000, bevorzugt von 700 bis 4 200 und können einzeln oder in Form von Mischungen untereinander zur Anwendung kommen.

Geeignete Polyetherdiole können dadurch hergestellt werden, dass man ein oder mehrere Alkylenoxide mit 2 bis 3 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid und Epichlorhydrin. Vorzugsweise werden Ethylenoxid, Propylenoxid und Mischungen aus 1,2-Propylenoxid und Ethylenoxid eingesetzt. Die Alkylenoxide können einzeln, alternierend nacheinander, als Blöcke (z.B. C3-ether-Block mit C2-Blöcken und mit überwiegend primären OH-Gruppen als Endgruppen) oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden.

Geeignete Polyetherdiole sind die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyetherdiole besitzen Molekulargewichte von 600 bis 5 000, bevorzugt von 700 bis 4 200. Sie können sowohl einzeln als auch in Form von Mischungen untereinander zur Anwendung kommen.

Als Kettenverlängerungsmittel C) werden aliphatische Diole oder Diamine mit einem Molekulargewicht von 60 bis 500 eingesetzt, vorzugsweise aliphatische Diole mit 2 bis 14 Kohlenstoffatomen, wie z.B. Ethandiol, 1,4-Butandiol, 1,6-Hexandiol, Diethylenglykol, Dipropylenglykol oder (cyclo)aliphatische Diamine, wie z.B. Isophorondiamin, Ethylendiamin, 1,2-Propylendiamin, 1,3-Propylendiamin, N-Methyl-propylen-1,3-diamin, N,N'-Dimethylethylendiamin. Es können auch Gemische der oben genannten Kettenverlängerer eingesetzt werden. Daneben können auch kleinere Mengen an Triolen zugesetzt werden.

Besonders bevorzugt ist 1,6-Hexandiol als Kettenverlängerungsmittel, gegebenenfalls in Abmischung mit bis zu 20 Gew.-% eines von 1,6-Hexandiol verschiedenen Kettenverlängerers mit einem mittleren Molekulargewicht von 60 bis 500 g/mol.

Je nach Anforderungsprofil können Teile der aliphatischen Diole und Diamine (bis zu 20 Gew.-% bezogen auf Kettenverlängerer) durch aromatische Diole und Diamine ersetzt werden. Beispiele für geeignete aromatische Diole sind Diester der Terephthalsäure mit Glykolen mit 2 bis 4 Kohlenstoffatomen, wie z.B. Terephthalsäure-bisethylenglykol oder Terephthalsäure-bis-1,4-butandiol, Hydroxyalkylenether des Hydrochinons, wie z.B. 1,4-Di(-hydroxyethyl)-hydrochinon, und ethoxylierte Bisphenole. Beispiele für geeignete aromatische Diamine sind 2,4-Toluylen-diamin und 2,6-Toluylendiamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Die erfindungsgemäßen TPU können nach den bekannten Band- oder Extruderverfahren hergestellt werden (GB-A 1,057,018 und DE-A 2,059,570). Bevorzugt ist das Verfahren nach PCT/EP 98/07753.

Vorzugsweise wird bei der kontinuierlichen Herstellung der thermoplastischen Polyurethane gemäß dem Extruder- oder Bandverfahren ein Katalysator eingesetzt. Geeignete Katalysatoren sind nach dem Stand der Technik bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Neben den TPU-Komponenten und gegebenenfalls Katalysatoren können auch UV-Stabilisatoren, Antioxidationsmittel, Hilfsmittel und Zusatzstoffe zugesetzt werden. Genannt seien beispielsweise Gleitmittel, wie Fettsäureester, deren Metallseifen, Fettsäureamide und Silikonverbindungen, Antiblockmittel, Inhibitoren, Stabilisatoren gegen Hydrolyse, Hitze und Verfärbung, Flammschutzmittel, Farbstoffe, Pigmente, anorganische und organische Füllstoffe und Verstärkungsmittel, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Die Zugabe von Additiven kann nach der Polymerisation durch Compoundierung oder auch während der Polymerisation erfolgen. Während der Polymerisation können beispielsweise Antioxidationsmittel und UV-Stabilisatoren im Polyol gelöst werden. Es können aber auch Gleitmittel und Stabilisatoren beim Extruderverfahren beispielsweise im zweiten Teil der Schnecke zugegeben werden.

Die erfindungsgemäßen TPU können zur Herstellung von Formkörpern, insbesondere zur Herstellung von Extrudaten (z.B. Folien) und Spritzgießteilen eingesetzt werden. Des weiteren können die erfindungsgemäßen TPU als sinterfähiges Pulver zur Herstellung von Flächengebilden und Hohlkörpern verwendet werden.

Die Erfindung soll anhand der nachfolgenden Beispiele näher erläutert werden.

**Beispiele**

**Herstellung der TPU und Spritzplatten**

Die TPU wurden folgendermaßen kontinuierlich hergestellt:

Die Komponente B), Antioxidationsmittel, Kettenverlängerer C) und Dibutylzinndilaurat wurden in einem Kessel unter Rühren auf ca. 110°C erhitzt und zusammen mit der Komponente A), welche mittels Wärmeaustauscher auf ca. 110°C erhitzt wurde, durch einen Statikmischer der Firma Sulzer (DN6 mit 10 Mischelementen und einer Scherrate von 500 s$^{-1}$) intensiv gemischt und dann in den Einzug einer Schnecke (ZSK 32) geführt. Das gesamte Gemisch reagierte auf dem Extruder bis zur vollständigen Umsetzung aus und wurde anschließend granuliert.

Das hergestellte Granulat wurde getrocknet und dann jeweils zu mehreren Spritzplatten verspritzt.

**Testbedingungen**

Dynamisch-mechanische Analyse (DMS)

Aus den Spritzplatten wurden Rechtecke (30 mm x 10 mm x 2 mm) gestanzt. Diese Prüfplatten wurden unter konstanter Vorlast - gegebenenfalls vom Speichermodul abhängig - periodisch mit sehr kleinen Deformationen angeregt und die auf die Einspannung einwirkende Kraft als Funktion der Temperatur und Anregungsfrequenz gemessen.

Die zusätzlich aufgebrachte Vorlast dient dazu, im Zeitpunkt negativer Deformationsamplitude die Probe noch ausreichend gespannt zu halten.

Die DMS-Messungen wurden mit dem Seiko DMS Modell 210 der Firma Seiko mit 1 HZ im Temperaturbereich von -150°C bis 200°C mit einer Heizrate von 2°C/min durchgeführt.

Zugversuch:

Reißdehnung und Reißfestigkeit wurden bei Raumtemperatur an S1-Stäben (entspricht Prüfkörper Typ5 nach EN ISO 527, ausgestanzt aus Spritzplatten) gemäß DIN 53455 mit einer Zuggeschwindigkeit von 200 mm/min gemessen.

DSC-Messung:

Die DSC (Differential Scanning Calorimetry) stellt eine effektive Methode dar, um Glas- und Schmelzpunkte sowie zugehörige Wärmekapazitäten oder Umwandlungsenthalpien zu detektieren und zu quantifizieren.

DSC-Thermogramme werden aufgenommen, indem man ein Aluminiumpfännchen, das 5-30 g Probe (in unserem Fall Granulat) enthält, und ein leeres Referenzaluminiumpfännchen mit der gleichen konstanten Geschwindigkeit aufheizt. Treten infolge von z. B. endothermen Umwandlungen in der Probe Temperaturdifferenzen zur Referenz auf, muss dem Probepfännchen kurzfristig mehr Wärme zugeführt werden. Diese Wärmeflussdifferenz ist das auswertbare Signal.

Detaillierter beschrieben ist die DSC z.B. im ‚Textbook of Polymer Science' von Fred W. Billmeyer, Jr. 3$^{rd}$ Edition eine Wiley-Interscience Publication.

Die hier aufgeführten DSC wurden mit einem DSC 7 der Firma Perkin Elmer durchgeführt. Hierzu wurden 5-30 mg Granulat in das Probepfännchen gegeben, die Probe auf -70° C abgekühlt und für eine Minute gehalten. Dann wurde mit einer Heizrate von 20°C pro Minute bis auf 260° C aufgeheizt. Der Schmelzpunkt ist das Maximum des auftretenden Schmelzpeaks.

| | |
|---|---|
| DBTL: | Dibutylzinndilaurat |
| Therathane 2000®: | Polytetrahydrofurandiol mit $\overline{M}_n$ = 2000 g/mol (Firma Du Pont) |
| Therathane 1000®: | Polytetrahydrofurandiol mit $\overline{M}_n$ = 1000 g/mol (Firma Du Pont) |
| Acclaim® 2220: | Polyetherpolyol mit Polyoxypropylen-Polyoxethyleneinheiten (mit ca. 85% primären Hydroxylgruppen und einem mittleren Molekulargewicht von $\overline{M}_n$ von ca. 2000 g/mol Fa. Bayer) |
| Acclaim® 4220: | Polyetherpolyol mit Polyoxypropylen-Polyoxethyleneinheiten (mit ca. 85% primären Hydroxylgruppen und einem mittleren Molekulargewicht von $\overline{M}_n$ von ca. 4000 g/mol Fa. Bayer) |
| Des W: | =H12-MDI: Isomerengemisch von Dicyclohexylmethan-diisocyanat |
| HDI: | Hexamethylendiisocyanat |
| Irganox® 1010: | Tetrakis[methylen-(3,5-di-tert-butyl-4-hydroxyhydrocinnamate)]methan (Ciba Specialty Chemi- |

cals Corp.)
HDO: 1,6-Hexandiol
BDO: 1,4-Butandiol

**Zusammensetzung der TPU**

| TPU | HDI/Des W | | Polyol | | HDO/BDO |
|---|---|---|---|---|---|
| | Mole | | Mole | | Mole |
| Vergleich 1 | 1,56 | HDI | 1,0 | Terathane 1000 | 0,58 HDO |
| Vergleich 2 | 2,14 | HDI | 1,0 | Terathane 2000 | 1,16 HDO |
| Vergleich 3 | 3,37 | HDI | 1,0 | Acclaim 2220 | 2,4 HDO |
| Vergleich 4[1)] | 8,7 | Des W | 1,0 | Acclaim 4220 | 7,7 BDO |
| Beispiel 1 | 6,36 | HDI | 1,0 | Acclaim 4220 | 5,42 HDO |
| Beispiel 2 | 9,65 | HDI | 1,0 | Acclaim 4220 | 8,75 HDO |
| Alle TPU enthalten 0,5 Gew.-% (bezogen auf das gesamte TPU) Irganox 1010, welches im Polyol gelöst wurde. Alle TPU wurden unter Zugabe von 40 ppm DBTL, bezogen auf das eingesetzte Polyol hergestellt. | | | | | |

1) Dieses TPU wurde unter Zugabe von 200 ppm DBTL, bezogen auf das eingesetzte Polyol hergestellt.

**Ergebnisse:**

| TPU | Reißfestigkeit in Mpa | Reißdehnung in % | Härte in Shore A | Schmelzpunkt aus DSC | Terw(bei E'=2Mpa) |
|---|---|---|---|---|---|
| Vergleich 1 | 23 | 890 | 85 | 98° C | 108° C |
| Vergleich 2 | 30 | 845 | 80 | 133° C | 128° C |
| Vergleich 3 | 18 | 760 | 83 | 140° C | 130° C |
| Vergleich 4 | 9 | 530 | 80 | Kein Peak | 125° C |
| Beispiel 1 | 9 | 400 | 80 | 163° C | 147° C |
| Beispiel 2 | 12 | 350 | 87 | 165° C | 155° C |
| Terw.= Erweichungstemperatur | | | | | |

**Ergebnisse:**

Wie der obigen Tabelle zu entnehmen ist, weisen die erfindungsgemäßen TPU niedrige Reißfestigkeiten bei gleichzeitiger hoher Wärmeformbeständigkeit (d.h. hoher Schmelzpunkt und hohe Erweichungstemperatur) auf.
Die Vergleichs-TPU hingegen sind entweder sehr reißfest und damit beispielsweise als Abdeckung für Airbags, insbesondere als unsichtbarer, integraler Bestandteil der Instrumententafel nicht anwendbar oder wenig wärmeformbeständig (Vergleich 4).

**Patentansprüche**

**1.** Weiche thermoplastische Polyurethane mit einer Shore A Härte von 70 bis 90 erhältlich aus, gegebenenfalls unter Verwendung von Katalysatoren (D),

A) einem Gemisch aus

EP 1 241 201 B1

A1) 100 bis 70 mol-% Hexamethylendiisocyanat (HDI) und

A2) 0 bis 30 mol-% andere von HDI verschiedene, aliphatische Diisocyanate,

B) einem Gemisch aus

B1) 100-70 Gew.-% eines Polyoxypropylenglykols oder eines Polyoxyethylenglykols oder Copolyoxyalkylendiolen auf Basis Propylenoxid und Ethylenoxid oder Gemische davon mit einem zahlenmittleren Molekulargewicht von 3 500 bis 10 000 g/mol und

B2) 0-30 Gew.-% eines von B1) verschiedenen Polyols mit einem zahlenmittleren Molekulargewicht zwischen 600 und 10000 g/mol und

C) Kettenverlängerer mit einem zahlenmittleren Molekulargewicht von 60 bis 500 g/mol, gegebenenfalls unter Zusatz von

E) üblichen Hilfsmitteln und Zusatzstoffen,

wobei das Äquivalenzverhältnis von Diisocyanat A) zu Polyol B) zwischen 1,5:1,0 und 30,0:1,0 liegt und wobei die NCO-Kennzahl (gebildet aus dem mit 100 multiplizierten Quotienten der Äquivalenzverhältnisse von Isocyanatgruppen aus A) und der Summe der Hydroxylgruppen aus B) und C)) 95 bis 105 beträgt.

2. Thermoplastische Polyurethane gemäß Anspruch 1, **dadurch gekennzeichnet, dass** das Gemisch B) aus 100 Gew.-% B1) besteht und der Kettenverlängerer C) aus 80 bis 100 Gew.-% 1,6-Hexandiol und 0 bis 20 Gew.-% eines von 1,6-Hexandiol verschiedenen Kettenverlängerers mit einem zahlenmittleren Molekulargewicht von 60 bis 500 g/mol besteht.

3. Verwendung der thermoplastischen Polyurethane gemäß Anspruch 1 oder 2 zur Herstellung von weichen Formkörpern.

4. Verwendung der thermoplastischen Polyurethane gemäß Anspruch 1 oder 2 zur Herstellung von weichen Extrudaten und weichen Spritzgießteilen.

5. Verwendung der thermoplastischen Polyurethane gemäß Anspruch 1 oder 2 als sinterfähiges Pulver zur Herstellung von weichen Flächengebilden und weichen Hohlkörpern.

6. Weiche Formkörper erhältlich aus einem thermoplastischen Polyurethan gemäß Anspruch 1 oder 2.

**Claims**

1. Soft thermoplastic polyurethanes having a Shore A hardness of 70 to 90 which are obtainable, optionally using catalysts (D), from

A) a mixture of

A1) 100 to 70 mol.% hexamethylene diisocyanate (HDI) and

A2) 0 to 30 mol.% of other aliphatic diisocyanates, different from HDI

B) a mixture of

B1) 100 to 70 wt.% of a polyoxypropylene glycol or of a polyoxyethylene glycol or copolyoxyalkylene diols based on propylene oxide and ethylene oxide or mixtures thereof having a number-average molecular weight of 3,500 to 10,000 g/mol and

B2) 0 to 30 wt.% of a different polyol from B1) having a number-average molecular weight of between 600 and 10,000 g/mol and

7

C) chain extenders having a number-average molecular weight of 60 to 500 g/mol,
optionally with the addition of

E) conventional auxiliary substances and additives, with the equivalent ratio of diisocyanate A) to polyol B) being between 1.5:1.0 and 30.0:1.0, and the NCO index (obtained from the quotient, multiplied by 100, of the equivalent ratios of isocyanate groups from A) and the sum of the hydroxyl groups from B) and C)) being 95 to 105.

2. Thermoplastic polyurethanes according to claim 1, **characterised in that** the mixture B) consists of 100 wt.% B1) and the chain extender C) consists of 80 to 100 wt.% 1,6-hexanediol and 0 to 20 wt.% of a chain extender which is different from 1,6-hexanediol and has a number-average molecular weight of 60 to 500 g/mol.

3. Use of the thermoplastic polyurethanes according to claim 1 or 2 for producing soft mouldings.

4. Use of the thermoplastic polyurethanes according to claim 1 or 2 for producing soft extrudates and soft injection-moulded parts.

5. Use of the thermoplastic polyurethanes according to claim 1 or 2 as sinterable powder for the production of soft flat structures and soft hollow bodies.

6. Soft mouldings obtainable from a thermoplastic polyurethane according to claim 1 or 2.

**Revendications**

1. Polyuréthannes thermoplastiques souples, ayant une dureté Shore A de 70 à 90, obtenus, le cas échéant avec utilisation de catalyseurs (D), à partir de

A) un mélange de

A1) 100 à 70 mol % d'hexaméthylènediisocyanate (HDI) et
A2) 0 à 30 mol % de diisocyanates aliphatiques autres que le HDI ;

B) un mélange de

B1) 100 à 70 % en poids d'un polyoxypropylèneglycol ou d'un polyoxyéthylèneglycol ou de copolyoxyalkylène-diols à base d'oxyde de propylène et d'oxyde d'éthylène ou de leurs mélanges, à un poids moléculaire moyen, moyenne en nombre, de 3 500 à 10 000 g/mol et
B2) 0 à 30 % en poids d'un polyol autre que B1), ayant un poids moléculaire moyen, moyenne en nombre, de 600 à 10 000 g/mol et

C) des agents d'allongement des chaînes à un poids moléculaire moyen, moyenne en nombre, de 60 à 500 g/mol,
le cas échéant avec adjonction de
E) des produits auxiliaires et additifs usuels,

avec un rapport de 1,5:1,0 à 30,0:1,0 entre les équivalents du diisocyanate A) et les équivalents du polyol B), et un indice de NCO (le quotient, multiplié par 100, du rapport entre les équivalents de groupes isocyanate de A) et la somme des groupes hydroxy de B) et C)) de 95 à 105.

2. Polyuréthannes thermoplastiques selon la revendication 1, **caractérisés en ce que** le mélange B) consiste en 100 % en poids de B1) et l'agent d'allongement des chaînes C) en 80 à 100 % en poids de 1,6-hexanediol et 0 à 20 % en poids d'un agent d'allongement des chaînes autre que le 1,6-hexanediol et ayant un poids moléculaire moyen, moyenne en nombre, de 60 à 500 g/mol.

3. Utilisation des polyuréthannes thermoplastiques selon la revendication 1 ou 2 pour la fabrication d'objets moulés souples.

**4.** Utilisation des polyuréthannes thermoplastiques selon la revendication 1 ou 2 pour la fabrication d'extrudats souples et de pièces souples moulées par injection.

**5.** Utilisation des polyuréthannes thermoplastiques selon la revendication 1 ou 2 à l'état de poudre frittable pour la fabrication d'articles planiformes souples et de corps creux souples.

**6.** Objets moulés souples obtenus à partir d'un polyuréthanne thermoplastique selon la revendication 1 ou 2.